# EUROPEAN PATENT APPLICATION

(11) **EP 2 071 351 A1**
(43) Date of publication of application: **17.06.2009**
(21) Application number: 07122845.6
(22) Date of filing: 11.12.2007
(51) Int. Cl.: G01S 1/00

(54) **Method and device for providing location services**

(71) Applicant: TELEFONAKTIEBOLAGET LM ERICSSON (publ), 164 83 Stockholm (SE)
(72) Inventor: Lethbridge, Simon, Thatcham, RG19 3XW (GB)
(74) Representative: Bratt, Hanna Catharina

(57) **Abstract**

A method of providing location services in a positioning device comprising at least two processors and a software implemented Global Positioning System in which in response to a request (102) to carry out a location fix it is determined (104) which of the processors should be selected for running GPS software and activating (106) said GPS software on said selected processor.

## Description

### Technical Field

The present invention relates to positioning devices, in general, and in particular to devices using software implemented Global Positioning System.

### Background

GPS devices for use in mass consumer market are more and more popular and they exist as separate portable devices, built-in in vehicles or in mobile phones. Building GPS into a mobile phone is possible thanks to small size of the GPS chips and their price, which decreased over the years. However, despite the price reduction GPS modules are installed primarily in high-end mobile phones.

Traditional GPS solutions involve a hardware module that can determine the user equipment's (UE) location with minimal support from the rest of the system. However, these solutions have the disadvantage that they are too expensive for some products.

Some vendors provide solutions with simplified hardware where CPU intensive work is done by the host CPU. This is called software GPS and is discussed in patent application US 2006/0074554 A1. Software GPS is a GPS system where the output of the sample and digitize block (part of the GPS receiver) is processed using a general purpose CPU without further recourse to GPS specific hardware.

### Summary

It is the object of the present invention to obviate at least some of the above disadvantages and provide an improved location services in devices using software GPS.

Accordingly, the invention seeks to preferably mitigate, alleviate or eliminate one or more of the disadvantages mentioned above singly or in any combination.

According to a first aspect of the present invention there is disclosed a method of providing location services in a positioning device comprising at least two processors and a software implemented Global Positioning System. The method comprises receiving a request to carry out a location fix, determining which of the processors should be selected for running GPS software and activating said GPS software on said selected processor.

According to a second aspect of the present invention there is provided a positioning device comprising at least two processors, a GPS receiver, a Positioning Application Server running on one of said processors and a data storage unit. Said Positioning Application Server is adapted to determine which of the processors should be selected for running GPS software and also adapted to activate said GPS software on said processor.

Further features of the present invention are as claimed in the dependent claims.

The present invention provides the benefit of location services in which a fix is obtained in a reduced time by maximizing resources available for running the software GPS with minimised disruption to the essential functions of the user equipment (UE).

### Brief description of the drawings

The present invention will be understood and appreciated more fully from the following detailed description taken in conjunction with the drawings in which:
FIG. 1 is a diagram illustrating a method of providing location services in one embodiment of the present invention;
FIG. 2A is a diagram illustrating a method of providing location services in one embodiment of the present invention;
FIG. 2B is a diagram illustrating a method of providing location services in one embodiment of the present invention;
FIG. 3 is a diagram illustrating a device providing location services in one embodiment of the present invention.

### Detailed description

The present invention is discussed herein below in the context of a GPS positioning system. However, it should be understood that it is not limited to GPS, but instead applies equally to other satellite positioning systems (e.g. Galileo and GLONASS).

The term "positioning device" herein below relates to a device that is adapted to determine its own location. It also covers devices which primary function is not determining location, e.g. mobile phones with GPS modules.

The term "telecommunications network" herein below relates to a wireless network designed to transmit voice and/or data, e.g. GSM, WCDMA, Professional Mobile Radio (e.g. TETRA) as well as to networks primarily designed to transmit data, e.g. WLAN (Wireless Local Area Network).

The term GPS software herein below refers to software modules, e.g. GPS driver, run on a general purpose processor and performing functions or operations of hardware modules of a known hardware implemented GPS.

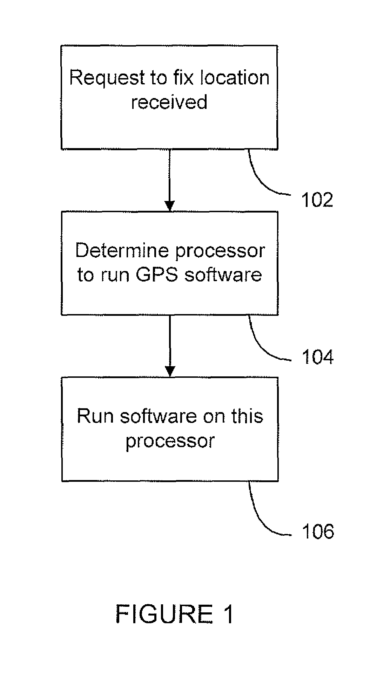

With reference to FIG. 1 a method of providing location services in a positioning device comprising two processors is presented. The invention is applicable to devices comprising two and more processors, but for the sake of simplicity in the embodiments presented only two processors are considered.

One example of a positioning device is a mobile phone with implemented GPS functionality. If this device receives a request to perform location fix, 102, it is determined which one of the processors of the device should run the GPS software. In a multiprocessor device it may happen that some of the processors are heavily loaded and some are not loaded at all, or their tasks do not consume too many resources. If the GPS software is not assigned to only one processor, it is possible to run it on a processor that has the smallest load and make the process of fixing the location faster. Once the processor with the smallest load is determined the GPS software is started, 106, on said processor.

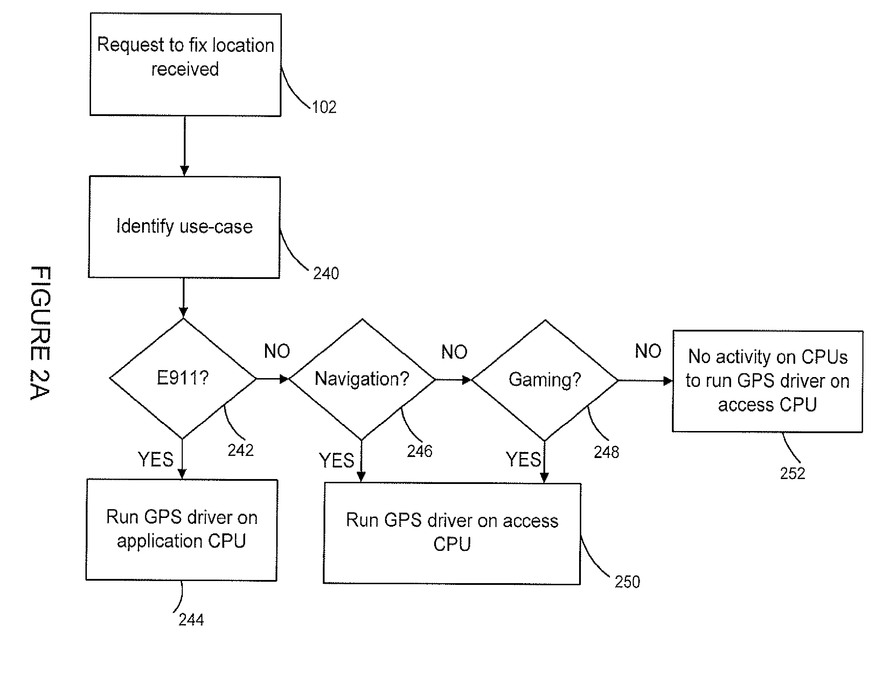

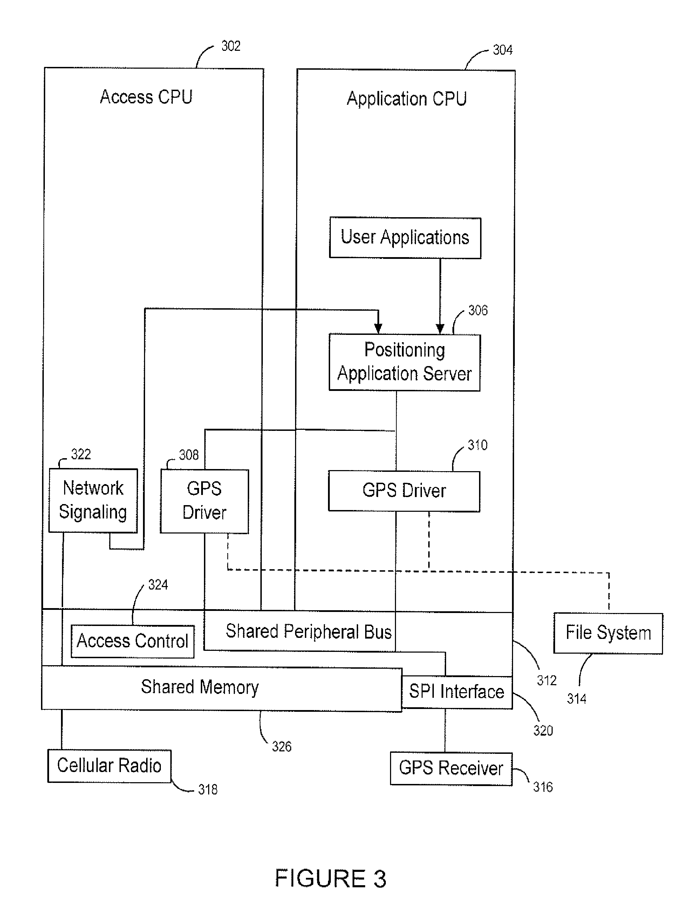

With reference to FIG. 2A and FIG. 3 a preferred embodiment is presented. In this embodiment a set of use-cases is listed as part of a Positioning Application Server of the device 300. In this embodiment the device 300 comprises a data storage unit. In one embodiment the data storage unit is a random access memory (RAM) 326 and in an alternative embodiment it is a file system 314 stored, for example, on a flash memory device. The flash memory device is technically a memory, but cannot be accessed directly. Therefore, using RAM 326 is quicker as it can be accessed by the program directly whereas data in the file system 314 must be placed in the random access memory before it can be used. The set of use-cases is a list or database of possible situations the device 300 may be in. Few examples of such use-cases include: emergency call (also referred to as E911 procedure), navigation and gaming. In this embodiment after receiving a request to fix location it is identified 240 which one of the use-cases predefined in the list is currently running in the positioning device 300. Once the current use-case is identified the GPS driver is started 244 on a processor assigned 242 to said use-case for running the GPS driver. As illustrated in FIG. 2A for E911 use case 242 (emergency call) the GPS driver is started on the application processor. If the result of the identification 240 shows that the current use-case is Navigation, 246, or Gaming, 248, then the GPS driver is run on the access processor 250. There could be a situation that there is no activity on the device's processors and in this situation the GPS driver is started on the access CPU (central processing unit), 252, which is a preferred one for running the GPS driver. The list of use-cases given in this description is limited to three for the sake of clarity and it is clear for one skilled in the art that more than three or a different set of use-cases may be defined in the positioning device without departing from the gist of the invention.

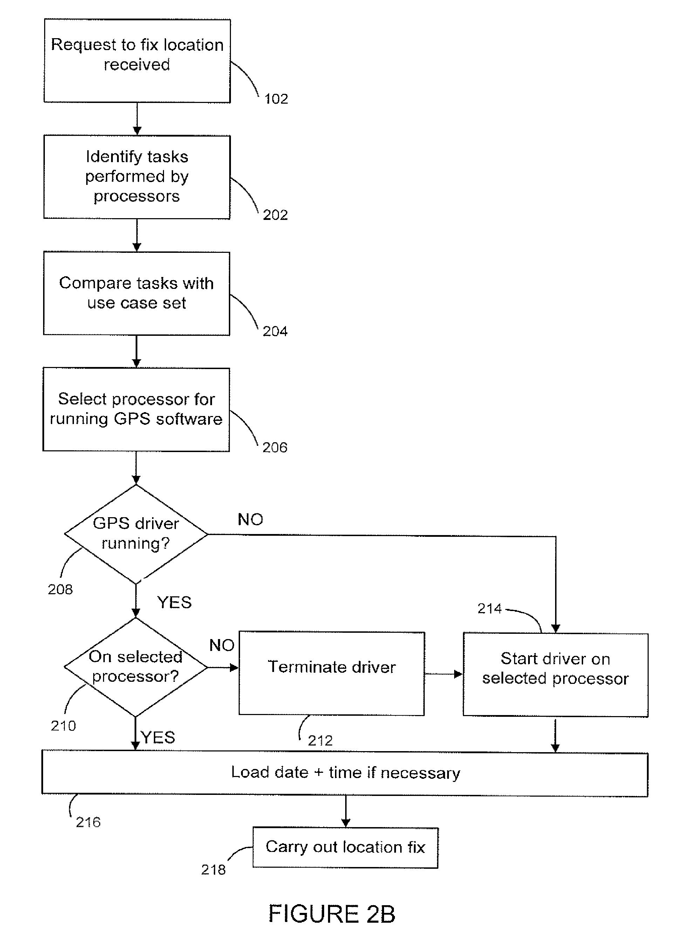

In one embodiment the current use-case is identified and the location fix is performed as illustrated in FIG. 2B. In this embodiment the Positioning Application Server 306, after a request to fix location 102 is received, identifies 202 tasks performed by the processors 302 and 304 of the device 300. The tasks are compared 204 with the set of use-cases and in this way the present use-case is determined.

In the process of determining tasks currently performed and selecting a processor for running the GPS driver the Positioning Application Server may use the following information:
1) Information available from NS (network signalling):
   - no call active;
   - voice call active;
   - video call active;
   - high speed data active.
2) Information from Application Layer or multimedia codecs:
   - no activity;
   - audio play back;
   - video play back;
   - 3D graphics.

Depending on the results of the determination step the following decisions are taken:
a) Voice call, no 3D graphics or video: the GPS driver shall be run on the application processor.
b) Video active: the GPS driver shall be run on the access processor.
c) No activity on either CPU: the GPS driver shall be run on the access processor.

Based on the determination explained above one of the processors is selected for running the GPS driver, where the GPS driver is an instance of the GPS software. The processor for running the GPS driver is assigned in the use-case database. After identifying the current use-case, based on the tasks performed, it is checked in the database which processor has to be used for running the GPS driver for the present use-case.

The Positioning Application Server 306 checks if the GPS driver 308, 310 is running on any of the processors 208. If the GPS driver is running it is checked if it is running on the selected processor 210. If the GPS driver is running on processor other than the selected one the GPS driver may be terminated and all available location information and ephemeris is stored in the shared memory 326 or in the file system 314. If accurate time information is available then it is reported to the Positioning Application Server 306. In a preferred embodiment the Positioning Application Server 306 uses a cellular time base available from network signalling (NS) as an accurate reference for storing this time information. The driver 308 or 310 relinquishes access to the GPS receiver from the deselected CPU by use of the access control block 324 in the shared peripheral bus 312.

In operation, the GPS driver, 310, loads available location and ephemeris from the random access memory (RAM) 326. In one embodiment the positioning device 300 comprises also a cellular radio unit 318, which via a network signalling stack 322 may provide the Positioning Application Server with assistance data. The assistance data includes accurate timing signals obtained from a communications network. In order to fix location a GPS unit must see at least three GPS satellites (although more satellites ensure greater accuracy of the fix) and perform time synchronisation with the signals from the GPS satellites. This time synchronisation, if based only on the signals from the GPS satellites, can be a lengthy process and therefore in one embodiment the accurate timing information is provided by the communications network in order to reduce time to fix. Using assistance data will not be discussed in this document as it is known in the art and is not the subject matter of the present invention.

The GPS driver 310, when activated, requests access to the GPS receiver via the shared peripheral bus 312 from the access control block 324. It then resets the GPS receiver. The GPS driver loads, 216, information from the file system (location and ephemeris data) if it is not already available from shared memory.

In one embodiment the software GPS is implemented in a cellular phone comprising three general purpose processors (CPUs). The access CPU is responsible for activities related to network signalling, i.e. access to cellular networks. It is responsible for all modem related activities. The application CPU is used for running the user interface and applications installed by the user/customer. It is also used for middleware. The audio CPU is used for audio codecs for both music playback and for audio in voice/video calls. All three CPUs can access a number of peripheral devices via the shared peripheral bus and the GPS software can be run on the access or application CPUs, however use of the access CPU is preferred.

In the embodiment illustrated in FIG. 3 for the sake of clarity only two processors (access CPU 302 and application CPU 304) are presented. Other elements and lines not essential for understanding the invention are also omitted.

In a preferred embodiment the processors 302 and 304, the GPS receiver 316 as well as the cellular radio unit 318 are connected to the shared peripheral bus 312. Using the shared peripheral bus is not essential, however, and in alternative embodiment it can be replaced with a switch (not shown).

The list of use-cases stored in the positioning application server, which are part of the functionality of the phone, includes for example:

### E911

In this use-case the positioning procedure has been activated by the communication network in response to the user making an emergency call. There is no application or GUI (Graphical User Interface) involvement in the procedure. The access CPU, 302, is heavily loaded so the GPS driver is run on the application CPU 304.

### Navigation

The procedure has been invoked by the user and takes the form of a tracking mode. The application CPU, 304, is heavily used looking after graphics and routing. The access CPU, 302, is only used for assistance data retrieval which typically happens before GPS calculation is started so the access processor 302 is selected for running the GPS software.

### Gaming

All CPUs in the device 300 are involved but the access CPU, 302, has only low volumes of data to transfer, although this must be transferred with low latency. In this case the GPS driver would be run on the access CPU, 302.

The processors 302 and 304 communicate with the remaining parts of the device 300 via the shared peripheral bus 312. When the GPS driver is activated on one of said processors it requests access to the GPS receiver via the shared peripheral bus, resets a GPS receiver 316 and loads 216 the ephemeris and location information from the shared memory or the file system. The ephemeris and location information were stored there in the process of terminating the GPS driver when it run on the other processor.

In the embodiments of the invention the GPS driver include software delivered by the GPS hardware vendor and the software can be reset between positioning procedures. It is also possible to shutdown the GPS driver and any associated operating system threads.

In one embodiment the CPUs all share access to the shared peripheral bus 312. The shared peripheral bus provides access to various specialized hardware blocks, e.g. cellular radio unit 318 and GPS receiver, 316. Preferably the device also comprises an access control block 324 which dynamically determines, which one of said processors 302, 304 is allowed to access particular hardware blocks via the shared peripheral bus 312.

In one embodiment the GPS receiver 316 is connected to the shared peripheral bus 312 mastered via an interface 320. In a preferred embodiment the interface is an I2C (Inter-Integrated Circuit) interface as it does not permit asynchronous transfer of data to the CPU. In alternative embodiments an SPI (Serial Peripheral Interface) or UART (universal asynchronous receiver/transmitter) interface is used.

## Claims

1. A method of providing location services in a positioning device comprising at least two processors and a software implemented Global Positioning System, the method comprising:
- receiving a request (102) to carry out a location fix;
- determining (104) which of the processors should be selected for running GPS software; and
- activating (106) said GPS software on said selected processor.

2. The method according to claim 1 comprising:
- determining whether GPS software is running (208) on one of said processors;
- terminating (212) said GPS software if said GPS software is running on a processor different (210) than the selected one.

3. The method according to claim 2, comprising storing available ephemeris and location information.

4. The method according to claim 2 or claim 3 comprising reporting to the Positioning Application Server accurate time information and the Positioning Application Server using cellular time as a reference for storing said time information.

5. The method according to any one of preceding claims comprising:
- loading (216) the ephemeris and location information;
- requesting access to a GPS receiver via a shared peripheral bus by said GPS software; and
- resetting the GPS receiver.

6. The method according to any one of preceding claims comprising identifying (240) a use-case that is currently run in said device and starting (244) the GPS software on a processor assigned (242) to said use-case for running the GPS software.

7. The method according to any one of claims 1 - 5, wherein the determination of the processor to run the GPS software comprises identifying (202) current tasks carried out by the processors, comparing (204) said tasks with a predefined set of use-cases and selecting (206) a processor for running the GPS software assigned to the identified use-case in said predefined set.

8. The method according to claim 1 comprising configuring an access control block of the positioning device such that the selected processor is granted access to a GPS receiver via a shared peripheral bus, performing the positioning procedure and relinquishing access to said GPS receiver on completion of the procedure.

9. The method according to claim 1, wherein a processor with the lowest load is selected for running the GPS software.

10. A positioning device (300) comprising at least two processors (302, 304), a GPS receiver (316), a Positioning Application Server (306) running on one of said processors (304) and a data storage unit (314, 326), wherein said Positioning Application Server (306) is adapted to determine which of the processors (302, 304) should be selected for running a GPS software (310) and to activate said GPS software (310) on said processor.

11. The device (300) according to claim 10 comprising a shared peripheral bus (312) connected to said processors (302, 304) and to said GPS receiver (316).

12. The device (300) according to claim 10 comprising a switch connected to said processors (302, 304) and to said GPS receiver (316).

13. The device (300) according to any one of claims 10 - 12 comprising a radio unit (318) adapted to operate in a cellular communications network and further adapted to provide assistance data from said cellular communications network to the Positioning Application Server (306).

14. The device (300) according to any one of claims 10 - 13 comprising an access control block (324) adapted to dynamically determine which of said processors (302, 304) is allowed to access particular hardware blocks.

15. The device (300) according to any one of claims 10, 11, 13, or 14 comprising an interface (320) between the shared bus (312) and the GPS receiver (316).

16. The device (300) according to claim 15, wherein the interface (320) permits only synchronous transfer of data on a bus mastered by one of said processors (302, 304) to the processor selected for running the GPS software (310).

17. The device (300) according to any one of claims 10 - 16, wherein the Positioning Application Server (306) is adapted to identify current tasks performed by the processors, compare said tasks with a predefined set of use-cases stored in the device and select a processor for running the GPS software assigned to the identified use-case in said predefined set.

## Amended claims

### Amended claims in accordance with Rule 137(2) EPC.

**1.** A method of providing location services in a positioning device comprising at least two processors and a software implemented Global Positioning System, the method comprising:
- receiving a request (102) to carry out a location fix;
- determining (104) which of the processors should be selected for running GPS software by identifying (240) a use-case that is currently run in said device and a processor that is assigned to said use-case for running GPS software; and
- activating (106) said GPS software on said selected processor.

**2.** The method according to claim 1 comprising:
- determining whether GPS software is running (208) on one of said processors;
- terminating (212) said GPS software if said GPS software is running on a processor different (210) than the selected one.

**3.** The method according to claim 2, comprising storing available ephemeris and location information.

**4.** The method according to claim 2 or claim 3 comprising reporting to the Positioning Application Server accurate time information and the Positioning Application Server using cellular time as a reference for storing said time information.

**5.** The method according to any one of preceding claims comprising:
- loading (216) the ephemeris and location information;
- requesting access to a GPS receiver via a shared peripheral bus by said GPS software; and
- resetting the GPS receiver.

**6.** The method according to any one of claims 1 - 5, wherein said determining (104) is based on information obtained from network signalling or/and from application layer.

**7.** The method according to any one of claims 1-5, wherein the determination of the processor to run the GPS software comprises identifying (202) current tasks carried out by the processors, comparing (204) said tasks with a predefined set of use-cases and selecting (206) a processor for running the GAPS software assigned to the identified use-case in said predefined set.

**8.** The method according to claim 1 comprising configuring an access control block of the positioning device such that the selected processor is granted access to a GPS receiver via a shared peripheral bus, performing the positioning procedure and relinquishing access to said GPS receiver on completion of the procedure.

**9.** The method according to claim 1, wherein a processor with the lowest load is selected for running the GPS software.

**10.** A positioning device (300) comprising at least two processors (302, 304), a GPS receiver (316), a Positioning Application Server (30G) running on one of said processors (304) and a data storage unit (314, 326), wherein said Positioning Application Server (306) is adapted to determine which of the processors {302, 304} should be selected for running a GPS software (310) by identifying a use-case that is currently run in said device and a processor that is assigned to said use-case for running GPS software; and to activate said GPS software (310) on said processor.

**11.** The device (300) according to claim 10 comprising a shared peripheral bus (312) connected to said processors (302, 304) and to said GPS receiver (316).

**12.** The device (300) according to claim 10 comprising a switch connected to said processors (302, 304) and to said GPS receiver (316).

**13.** The device (300) according to any one of claims 10-12 comprising a radio unit (318) adapted to operate in a cellular communications network and further adapted to provide assistance data from said cellular communications network to the Positioning Application Server (306).

**14.** The device (300) according to any one of claims 10 - 13 comprising an access control block (324) adapted to dynamically determine which of said processors (302, 304) is allowed to access particular hardware blocks.

**15.** The device (300) according to any one of claims 10, 11, 13, or 14 comprising an interface (320) between the shared bus (312) and the GPS receiver (316).

**16.** The device (300) according to claim 15, wherein the interface (320) permits only synchronous transfer of data on a bus mastered by one of said processors (302, 304) to the processor selected for running the GPS software (310).

**17.** The device (300) according to any one of claims 10 - 16, wherein the Positioning Application Server (306) is adapted to identify current tasks performed by the processors, compare said tasks with a predefined set of use-cases stored in the device and select a processor for running the GPS software assigned to the identified use-case in said predefined set.
